# EUROPEAN PATENT APPLICATION

(11) **EP 1 784 025 A2**
(43) Date of publication of application: **09.05.2007**
(21) Application number: 06000650.9
(22) Date of filing: 12.01.2006
(51) Int. Cl.: H04N 9/82, H04N 9/806

(54) **Digital television recorder for recording multiple sets of audio tracks**

(30) Priority: 03.11.2005 US 163927
(71) Applicant: CyberLink Corp., Hsin-Tien City, Taipei Hsien (TW)
(72) Inventor: Hsu, Chiao-Fang, Jhonghe City Taipei County Taiwan (CN); Lee, Tung-Ying, Dongshan Hsiang Tainan Hsien Taiwan (CN)
(74) Representative: Schaeberle, Steffen

(57) **Abstract**

A digital television (DTV) recorder (100) includes a tuner (110) coupled to an incoming RF signal for selecting a carrier frequency and outputting a corresponding transport stream, a program de-multiplexer (120) such as an MPEG de-multiplexer coupled to the transport stream for outputting at least one selected program service, a track selector (130, 200) coupled to the program de-multiplexer (120) for selecting a plurality of sets of audio tracks from the selected program service, and a storage module (150, 300) coupled to the track selector for storing the selected sets of audio tracks onto a storage medium (330).

## Description

The present invention relates to a digital television (DTV) recorder and a method for recording a digital television program according to the pre-characterizing clauses of claims 1 and 15.

In order to record a DTV broadcast, a DTV compatible recorder is required. This is an apparatus that stores the viewed program onto a digital medium. Most DTV recorders typically only record the solely viewed video track, along with the specific user selected set of audio tracks during the broadcast. For instance, if a program is viewed with French as the selected language, English as the subtitles, and utilizes a stereo audio configuration, the playback of this program on the DTV recorder will re-enact the exact same setup without any possibility of an alternate configuration.

Therefore when viewing a pre-recorded DTV program, the user cannot select an alternate set of audio tracks, or any other possible viewing configuration for playback. The playback configuration of the recorded program is predetermined by the settings at the time of which the DTV recording took place. Current DTV recorders do not record all available sets of audio tracks during broadcast, and hence do not allow for the viewer to change the audio tracks upon playback.

This in mind, the present invention aims at providing a digital television (DTV) recorder and a method for recording a digital television program that records all available sets of audio tracks during a DTV broadcast, and allows a viewer of the recording to change the audio tracks upon playback.

This is achieved by a DTV recorder and a method for recording a DTV program according to claims 1 and 15. The dependent claims pertain to corresponding further developments and improvements.

As will be seen more clearly from the detailed description following below, the claimed DTV recorder and method for recording a DTV program includes a track selector for selecting a plurality of sets of audio tracks from the selected program service.

In the following, the invention is further illustrated by way of example, taking reference to the accompanying drawings. Thereof
Fig. 1 is a drawing of a DTV recorder according to a first exemplary embodiment of the present invention,
Fig. 2 is a detailed drawing of an embodiment of the track selector module within the DTV recorder of Fig.1,
Fig. 3 is a detailed drawing of the storage module of Fig.1,
Fig. 4 is a process flow chart of the recording method of the DTV recorder of Fig.1,
Fig. 5 is a DTV recorder according to a second exemplary embodiment of the present invention, and
Fig. 6 is a DTV recorder according to a third exemplary embodiment of the present invention.

Digital television (DTV) is a recently commercialized broadcasting system, which provides its viewers with many more options and choices in television viewing than traditional analog television. The high bandwidth efficiency used in the transmission of DTV allows for more data to be sent, resulting in many more features and configurations in the viewed program. TV broadcasts offer a vastly superior screen resolution, user selectable viewing aspect ratios, and adjustable audio configurations. Many of these new features are not available through traditional analog television, and as such, DTV serves to represent the future in television viewing.

With DTV, not only does the viewer have the option of choosing the appropriate subtitles and display languages for a specified program, but the viewer can also select the specific audio or language tracks to be played during the program as well. The audio track may contain the program dialogue in an alternate language, sound effects, audio standards and configurations, music soundtracks, or other peripheral audio tracks. Many DTV broadcasts also contain supplemental data tracks, which may include hypertext transmission for internet linking, or feedback sensory information.

In order to record a DTV broadcast, a DTV compatible recorder is required. This is an apparatus that stores the viewed program onto a digital medium. Most DTV recorders typically record the solely viewed video track, along with the specific user selected set of audio tracks during the broadcast. For instance, if a program is viewed with French as the selected language, English subtitles, and a stereo audio configuration, a playback of this program on the DTV recorder will re-enact this exact same setup upon playback without any possibility of an alternate configuration.

With the extra bandwidth available through DTV, and the improving methods of satellite and DTV broadcasting, one expects that even more information streams and data sets will be available for each broadcasted program in the near future. This may include further multiple audio streams, video streams, multi-angle displays, feedback and sensory streams, and other potential peripheral data streams. These features will undoubtedly serve to increase the excitement and entertainment value of a live digital broadcast.

While the viewing of a live DTV broadcast can be an exciting, exhilarating and flexible process, the viewing of a previously recorded DTV program can be rather confined and restricted. In a typically recorded DTV program, the user cannot select an alternate set of audio tracks, or any other possible viewing configuration for playback. These configurations may include: language options, subtitles, viewing angles, supplemental data, and audio configurations. The viewing configurations for the recorded program are predetermined by the settings at the time of which recording took place. Current DTV recorders do not allow for the viewer to change the sets of audio tracks and other relevant options and configurations to an alternate configuration upon playback.

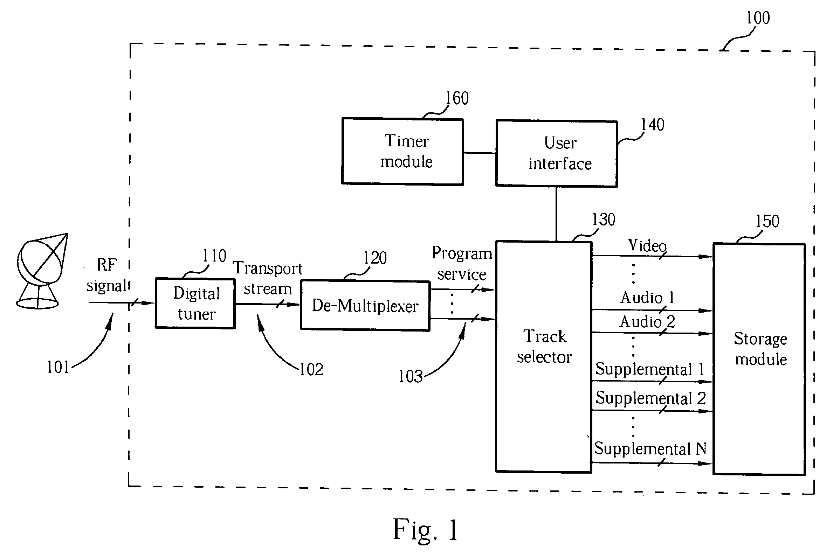

Fig. 1 illustrates a DTV recorder 100 according to a first exemplary embodiment of the present invention. In this embodiment the DTV recorder 100 is integrated into a DTV receiver, however please note that other embodiments and configurations may exist. A radio frequency (RF) signal 101 is broadcasted by a network provider to the DTV recorder 100 as shown in Fig.1. The broadcast network can be a cable network, satellite network or a terrestrial broadcast network transmitting digital information. The transmitted information is received by the digital tuner 110, which tunes into and isolates a specific carrier frequency of the RF Signal 101. For example, different carrier frequencies could correspond to different network providers. A specific carrier frequency is then selected and isolated, producing a transport stream 102 that is outputted from the digital tuner 110.

The transport stream 102 contains the entire group of various program channels corresponding to the specific carrier frequency as transmitted by the network provider. This stream is de-modulated using a de-multiplexer 120 in order to selecting a single program service 103 corresponding to a single broadcasted program. The program service 103 itself contains a plurality of different audio, video, and supplemental data tracks. For example, a broadcasted movie may contain multiple video tracks. The program may have a standard video track corresponding to a standard visual display, and an alternate video track for a wide-screen version, or possibly another video track for different camera angles. The same movie may also have several independent sets of audio tracks reserved for multi channel audio configurations. A mono configuration requires one audio track for playback, while a stereo setup requires two audio tracks, and a Dolby Digital 5.1 requires six independent tracks, and typically each set of audio tracks also corresponds to an alternate language (such as French or Spanish). The supplemental data tracks in the program service 103 may contain tracks for closed captioning or subtitles, hypertext links for interactive programming, or other peripheral features.

When viewing a DTV broadcast, typically only a preferred audio visual configuration is shown from the program service 103. This generally means a single video channel, a single language dialogue setting, a single (if any) set of subtitle dialogue, a single audio theater configuration and so forth. The configuration is setup such that there are no two sets of the same potentially conflicting information types. Audio-visual tracks not used in viewing are blocked off and prevented from further propagation in the processing chain. For example, if a DTV broadcast includes multiple language tracks, only the single language selected for playback is generally recorded by DTV recorders of the related art.

To overcome this problem, and allow multiple sets of audio tracks (and supplemental data tracks likewise) to be recorded along with the DTV program, a track selector 130 is utilized for selecting a plurality of sets of audio tracks, video tracks and supplemental data tracks from the selected program service 103. The supplemental data tracks may include various subtitle dialogue, hyperlinking data, and other peripheral data streams. The track selector 130 is coupled to the de-multiplexer 120 to receive the program service 103 containing the entire audio-visual and data track information.

In one embodiment, the track selector 130 operates through a user interface 140, through which a user can specify desired sets of audio tracks to record. The user interface 140, displays the available sets of audio tracks, supplemental data tracks and video tracks to the user, and thereby allows the user to choose which tracks are passed to the storage module 150. For example, the user can specify at least one video and supplemental data track via the user interface 140, such that the track selector 130 can select a default video source and supplemental data source. The user interface 140 can also further operate in a manual recording mode, where a user can manually select a desired configuration for recording.

Once the desired sets of audio, video and supplemental data tracks are specified by the user, the user interface 140 controls the track selector 130 to select these tracks from the plurality of available sets of audio, video and supplemental data tracks from the program service 103. This desired data stream is then outputted by the track selector 130 and sent to the storage module 150. The storage module 150 is directly coupled to the track selector 130 output, and acts to store the selected sets of audio, video and supplemental data tracks from the program service 103 onto a desired digital storage medium.

By passing a plurality of sets of selected audio tracks from the program service 103 to the storage module 150, different languages of the recorded DTV program are thereby available during playback. For example, if the original DTV broadcast includes a plurality of five languages (e.g., English, Chinese, French, Spanish, and Japanese), a user of the DVD recorder 100 can select to record the audio tracks for any or all of these five languages for storage and later playback. In this way, if the user selects English and Chinese audio to be recorded, the track selector 130 will pass all the audio tracks associated with English and Chinese to the storage module 150. The actual number of audio tracks passed to the storage module 150 by the track selector 130 depends on the particular multi channel audio configuration for each language. That is, if the English audio is provided as Dolby Digital 5.1, then six audio tracks corresponding to the English audio set will be passed to the storage module 150. Likewise, if the Chinese audio is provided as stereo, then two audio tracks corresponding to the Chinese audio set will be passed to the storage module 150.

Should the user desire more flexibility and options in viewing a recorded DTV program, the user can utilize the track selector 130 to select all of the audio tracks from the program service 103, and store all of the audio tracks onto the storage medium through the storage module. In this manner, the user will have the full variety of languages to select from upon playback, similar to the original DTV broadcast. In the same manner, the user could also choose to select all of the available subtitle and video tracks to record as well. However, recording in this manner will consume the most storage space from the storage medium, and as such, the user may elect to select only the desired audio/visual sets as previously described in an effort to reduce storage consumption.

Flexibility and further control of the DTV recorder 100 can be enhanced through the addition of a timer module 160. In this embodiment, the timer module 160 is coupled to the user interface 140, and can direct the DTV recorder 100 to record a particular DTV program at a future time as appointed by the user. If a user wants to record a DTV program that has yet to commence, the user would enter the desired recording configuration, including the desired sets of audio tracks to record, and also enter the future recording time through the user interface 140. The user interface allows the user to choose the desired group of sets from the audio tracks to be recorded at a particular forthcoming time. That is, the user can select which languages of the DTV program to pass to the storage module 150 and make available for playback. The timer module 160 would then direct the DTV recorder 100 to record the desired program with the selected sets of audio tracks at the user defined time according to the configuration already set by the user.

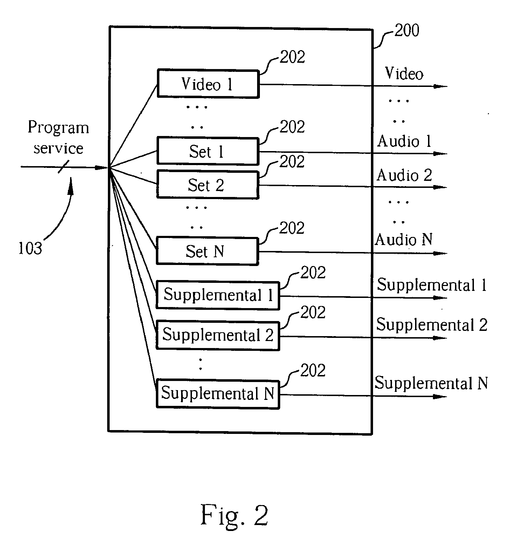

Fig. 2 shows a block diagram of an embodiment of a track selector 200. The track selector 200 shown in Fig. 2 can be utilized to implement the track selector 130 of Fig.1. Although one embodiment of track selector 130 is shown here, please note that other possible embodiments of track selector 130 also exist. The full contents of the program service 103 are inputted into the track selector 200. As described above, the audio tracks of the program service 103 are typically categorized into different sets, which may correspond to different language groups. For example, one set may correspond to all the audio channels relevant to English language viewing, while another set may contain all the audio channels relevant to Spanish language viewing. The track selector 200 hence operates as a filtering mechanism of sorts, comprising a plurality of filters 202 to allow the desired sets of audio, visual and supplemental tracks to output to the storage module 150 for recording. Sets not chosen by the user, are not passed through the corresponding filters 202, and are therefore not recorded by the storage module 150. For example, if audio sets 1 and 3 are selected for recording, then the filters 202 for the other audio sets will be blocked, and only audio sets 1 and 3 will be passed to the storage module 150.

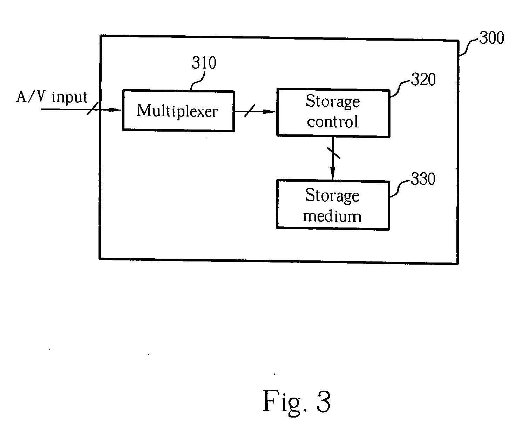

Fig. 3 shows a possible embodiment for a storage module 300. The storage module 300 shown in Fig. 3 can be utilized to implement the storage module 150 of Fig.1. As shown in Fig.3, the storage module 300 comprises a multiplexer 310, a storage control unit 320, and a storage medium 330. Although one embodiment is shown here, please note that other possible embodiments of storage module 150 also exist. The output of the track selector 130 is accepted by the multiplexer 310, and is accordingly processed. Digital broadcasts are typically compressed using the MPEG compression algorithm standard for DTV. The processed audio-visual data is sent to the storage control unit 320, which accordingly organizes the data, and records the data onto the storage medium 330. In preferred embodiments, the storage medium 330 is of digital format, and may be implemented as a hard disk drive, flash memory, a CD disc, or a DVD disc.

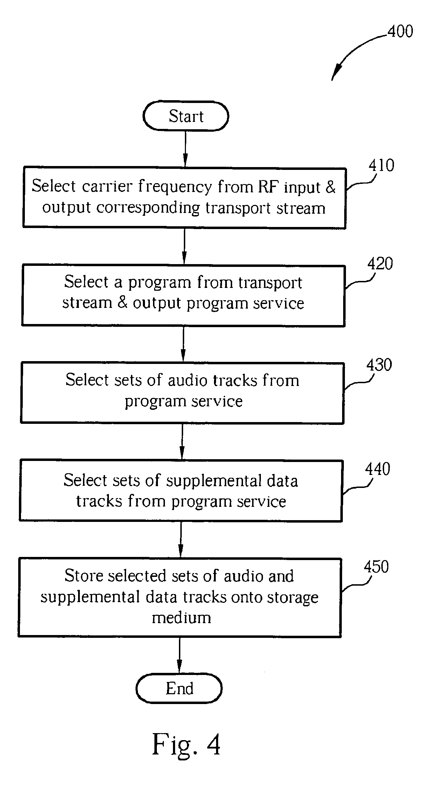

Fig.4 displays a process flow chart 400 of a method for recording a DTV program according to an exemplary embodiment of the present invention. Provided that substantially the same result is achieved, the steps of the process 400 need not be in the exact order shown and need not be contiguous, that is, other steps can be intermediate. This method allows a user to record a program with the desired sets of audio tracks onto a storage medium and includes the following steps:
- Step 410:: Select a carrier frequency from an RF broadcast, isolate the frequency, and output a corresponding transport stream.
- Step 420:: Select a program from the transport stream output in Step 410, de-modulate the signal, and output a program service.
- Step 430:: Select desired sets of audio tracks from the program service for recording.
- Step 440:: Select sets of supplemental data tracks from the program service.
- Step 450:: Store the DTV program with the selected sets of audio and supplemental data tracks onto the storage medium.

In another mode of process 400, step 430 can consist of selecting all the sets of audio tracks from the program service, and the final step 440 consists of storing all sets of audio tracks onto the storage medium. In this way, on playback, the user will have the full variety of languages to select from, similar to the original DTV broadcast. Because this mode elects to select and record all audio tracks onto the storage medium, this mode would also require the most memory and storage space. Should the user wish to reduce storage consumption on the recording medium, the user may choose to personally select only the desired sets of audio tracks to record, as described in the original step 430 shown in Fig.4.

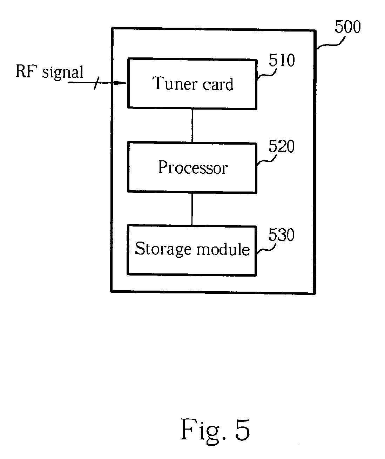

Fig. 5 is a DTV recorder according to a second exemplary embodiment of the present invention. In this embodiment, the DTV recorder is integrated into a personal computer 500. A tuner card 510, is utilized to receive an RF signal from an incoming broadcast source. A processor 520 is coupled to the tuner card and utilized to carry out the process flow as illustrated above in process 400. Also included in the embodiment is storage module 530, which is used to store the selected program of process 400 onto a desired storage medium such as a hard disk drive or optical disc.

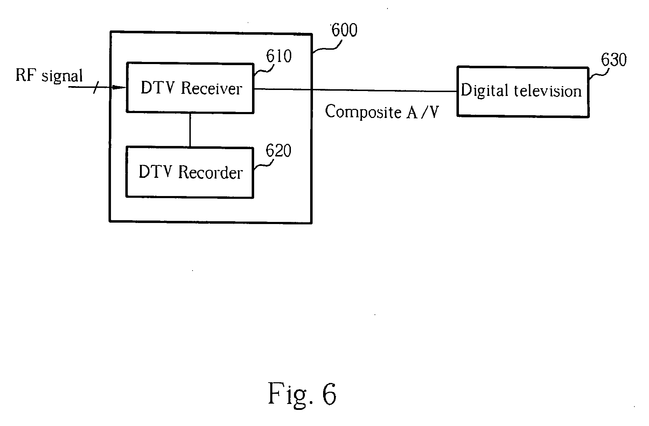

Fig 6. shows yet another embodiment of a DTV recorder integrated into a set top box 600 according to the present invention. The set top box 600 comprises a DTV receiver 610, and a DTV recorder 620. The DTV receiver 610 is coupled to the incoming RF signal from the broadcast source. The incoming RF signal is then accordingly processed, and outputted as a composite audio-video signal for the digital television 630. The DTV receiver 610 is further coupled to a DTV recorder 620. The DTV recorder 620 acts to record the desired program following the process flow illustrated in the above by process 400.

According to the present invention, a digital television (DTV) recorder includes a tuner coupled to an incoming RF signal for selecting a carrier frequency and outputting a corresponding transport stream. A program de-multiplexer is coupled to the transport stream for outputting at least one selected program service, and a track selector is coupled to the program de-multiplexer for selecting a plurality of sets of audio tracks and supplemental data tracks from the selected program service. Finally, a storage module is coupled to the track selector for storing the selected sets of audio tracks and supplemental data tracks onto a storage medium. By passing a plurality of sets of selected audio tracks from the program service to the storage module, different languages of the recorded DTV program are thereby available during playback. A user interface and timer module can be included to further increase the versatility and convenience of recording DTV programs.

### Preferred features of the Invention

Clause 1. A digital television (DTV) recorder comprising:
   a tuner coupled to an incoming RF signal for selecting a carrier frequency and outputting a corresponding transport stream;
   a program de-multiplexer coupled to the transport stream for outputting at least one selected program service;
   a track selector coupled to the program de-multiplexer for selecting a plurality of sets of audio tracks from the selected program service; and
   a storage module coupled to the track selector for storing the selected sets of audio tracks onto a storage medium.
Clause 2. The DTV recorder of clause 1, wherein the storage medium is a digital storage medium being either a DVD, a hard disk drive, or a flash memory device.
Clause 3. The DTV recorder of clause 1, wherein the track selector is for selecting all the sets of audio tracks from the selected program service, and the storage module is for storing all the sets of audio tracks from the selected program service onto the storage medium.
Clause 4. The DTV recorder of clause 1, further comprising a user interface coupled to the track selector for allowing a user of the DTV recorder to choose a desired group from the sets of audio tracks, the user interface for displaying an availability of the sets of audio tracks, the track selector for selecting the sets of audio tracks from the selected program service according to the desired group as chosen by the user.
Clause 5. The DTV recorder of clause 4, further comprising a timer unit for directing the DTV recorder to perform a recording operation as appointed by the user, the user interface for allowing the user to choose the desired group from the sets of audio tracks to be recorded at a particular forthcoming time as scheduled by the user.
Clause 6. The DTV recorder of clause 4, wherein the track selector is further for selecting at least one video track as appointed by the user, the user interface for further allowing the user to choose the desired group including at least one video track to be recorded onto the storage medium.
Clause 7. The DTV recorder of clause 4, wherein the track selector is further for selecting at least one supplemental data track as appointed by the user, the user interface for further allowing the user to choose the desired group including at least one supplemental data track to be recorded onto the storage medium.
Clause 8. The DTV recorder of clause 4, wherein the user interface is operable in a manual recording mode, allowing the user to manually select the desired group from the sets of audio tracks, and a desired set of supplemental data tracks from the selected program service to be recorded into the storage module.
Clause 9. The DTV recorder of clause 1, wherein the sets of audio tracks correspond to alternate language groups.
Clause 10. The DTV recorder of clause 1, wherein the track selector is further for selecting available subtitle tracks corresponding to each of the selected sets of audio tracks, and the storage module further for storing the available subtitle tracks corresponding to each of the selected sets of audio tracks onto the storage medium.
Clause 11. The DTV recorder of clause 1, wherein the storage module records data onto the storage medium using an MPEG encoding.
Clause 12. The DTV recorder of clause 1, wherein the program de-multiplexer is an MPEG de-multiplexer.
Clause 13. The DTV recorder of clause 1, wherein the track selector is further for selecting at least one video track from the selected program service, and the storage module is further for storing the selected video tracks onto the storage medium.
Clause 14. The DTV recorder of clause 1, being implemented as a set top box.
Clause 15. A method for recording a digital television (DTV) program comprising:
   selecting a carrier frequency from an RF input and outputting a corresponding transport stream;
   selecting a program service from the transport stream;
   selecting a plurality of sets of audio tracks from the program service; and
   storing the selected sets of audio tracks onto a storage medium.
Clause 16. The method of clause 15, wherein the storage medium is implemented as a digital storage medium being either a DVD, a hard disk drive, or a flash memory device.
Clause 17. The method of clause 15, further comprising:
   selecting all the sets of audio tracks from the program service; and
   storing all the sets of audio tracks onto the storage medium.
Clause 18. The method of clause 15, further comprising:
   providing a user interface;
   displaying an availability of the sets of audio tracks utilizing the user interface; and
   selecting a desired group from the sets of audio tracks to record utilizing the
   user interface.
Clause 19. The method of clause 18, further comprising:
   providing a timer unit;
   utilizing the user interface to allow a user to choose the desired group from the sets of audio tracks to be recorded at a particular forthcoming time; and
   recording a DTV broadcast in accordance to the settings of the timer unit as
   set through the user interface.
Clause 20. The method of clause 18, further comprising:
   selecting at least one video track as appointed by a user; and
   utilizing the user interface for allowing the user to choose the desired group
   including at least one video track to be recorded onto the storage medium.
Clause 21. The method of clause 18, further comprising:
   selecting at least one supplemental data track as appointed by a user; and
   utilizing the user interface for allowing the user to choose the desired group including at least one supplemental data track to be recorded onto the storage
   medium.
Clause 22. The method of clause 18, further comprising utilizing the user interface in a manual recording mode wherein the user can manually select the desired group from the sets of audio tracks, and a desired set of supplemental data tracks from the selected program service to be recorded into the storage module.
Clause 23. The method of clause 15, wherein the sets of audio tracks correspond to alternate language groups.
Clause 24. The method of clause 15, further comprising:
   selecting available subtitle tracks corresponding to each of the selected sets of audio tracks; and
   storing the available subtitle tracks corresponding to each of the selected sets of audio tracks onto the storage medium.
Clause 25. The method of clause 15, wherein the storage module records data onto the storage medium using an MPEG encoding.
Clause 26. The method of clause 15, wherein the program de-multiplexer is an MPEG de-multiplexer.
Clause 27. The method of clause 15, further comprising:
   selecting at least one video track from the selected program service; and
   storing the selected video tracks onto the storage medium.
Clause 28. A stand alone set top box for executing the method of clause 15.

## Claims

1. A digital television (DTV) recorder (100) comprising:
a tuner (110) coupled to an incoming RF signal for selecting a carrier frequency and outputting a corresponding transport stream;
a program de-multiplexer (120) coupled to the transport stream for outputting at least one selected program service;
a storage module (150, 300) for storing the selected sets of audio tracks onto a storage medium (330); and
**characterised by**:
a track selector (130, 200) coupled to the program de-multiplexer (120) and the storage module (150, 300) for selecting a plurality of sets of audio tracks from the selected program service.

2. The DTV recorder (100) of claim 1, **characterised in that** the track selector (130, 200) is for selecting all the sets of audio tracks from the selected program service, and the storage module (150, 300) is for storing all the sets of audio tracks from the selected program service onto the storage medium (330).

3. The DTV recorder (100) of claim 1, **characterised by** a user interface (140) coupled to the track selector (130, 200) for allowing a user of the DTV recorder (100) to choose a desired group from the sets of audio tracks, the user interface (140) for displaying an availability of the sets of audio tracks, the track selector (130, 200) for selecting the sets of audio tracks from the selected program service according to the desired group as chosen by the user.

4. The DTV recorder (100) of claim 3, **characterised by** a timer unit (160) for directing the DTV recorder (100) to perform a recording operation as appointed by the user, the user interface (140) for allowing the user to choose the desired group from the sets of audio tracks to be recorded at a particular forthcoming time as scheduled by the user.

5. The DTV recorder (100) of claim 3, **characterised in that** the track selector (130, 200) is further for selecting at least one video track as appointed by the user, the user interface (140) for further allowing the user to choose the desired group including at least one video track to be recorded onto the storage medium (330).

6. The DTV recorder (100) of claim 3, **characterised in that** the track selector (130, 200) is further for selecting at least one supplemental data track as appointed by the user, the user interface (140) for further allowing the user to choose the desired group including at least one supplemental data track to be recorded onto the storage medium (330).

7. The DTV recorder (100) of claim 3, **characterised in that** the user interface (140) is operable in a manual recording mode, allowing the user to manually select the desired group from the sets of audio tracks, and a desired set of supplemental data tracks from the selected program service to be recorded into the storage module (150, 300).

8. The DTV recorder (100) of claim 1, **characterised in that** the sets of audio tracks correspond to alternate language groups.

9. The DTV recorder (100) of claim 1, **characterised in that** the track selector (130, 200) is further for selecting available subtitle tracks corresponding to each of the selected sets of audio tracks, and the storage module (150, 300) further for storing the available subtitle tracks corresponding to each of the selected sets of audio tracks onto the storage medium (330).

10. The DTV recorder (100) of claim 1, **characterised in that** the track selector (130, 200) is further for selecting at least one video track from the selected program service, and the storage module (150, 300) is further for storing the selected video tracks onto the storage medium (300).

11. A method for recording a digital television (DTV) program comprising:
selecting a carrier frequency from an RF input and outputting a corresponding transport stream;
selecting a program service from the transport stream, and
**characterised by**:
selecting a plurality of sets of audio tracks from the program service; and
storing the selected sets of audio tracks onto a storage medium (330).

12. The method of claim 11, **characterised by**:
selecting all the sets of audio tracks from the program service; and
storing all the sets of audio tracks onto the storage medium (330).

13. The method of claim 11, **characterised by**:
providing a user interface (140);
displaying an availability of the sets of audio tracks utilizing the user interface (140); and
selecting a desired group from the sets of audio tracks to record utilizing the user interface (140).

14. The method of claim 13, **characterised by**:
providing a timer unit (160);
utilizing the user interface (140) to allow a user to choose the desired group from the sets of audio tracks to be recorded at a particular forthcoming time; and
recording a DTV broadcast in accordance to the settings of the timer unit (160) as set through the user interface (140).

15. The method of claim 13, **characterised by**:
selecting at least one video track as appointed by a user; and
utilizing the user interface (140) for allowing the user to choose the desired group including at least one video track to be recorded onto the storage medium (330).

16. The method of claim 13, **characterised by**:
selecting at least one supplemental data track as appointed by a user; and
utilizing the user interface (140) for allowing the user to choose the desired group including at least one supplemental data track to be recorded onto the storage medium (330).

17. The method of claim 13, **characterised by** utilizing the user interface (140) in a manual recording mode wherein the user can manually select the desired group from the sets of audio tracks, and a desired set of supplemental data tracks from the selected program service to be recorded into the storage module (150, 300).

18. The method of claim 11, **characterised in that** the sets of audio tracks correspond to alternate language groups.

19. The method of claim 11, **characterised by**:
selecting available subtitle tracks corresponding to each of the selected sets of audio tracks; and
storing the available subtitle tracks corresponding to each of the selected sets of audio tracks onto the storage medium (330).

20. The method of claim 11, **characterised by**:
selecting at least one video track from the selected program service; and
storing the selected video tracks onto the storage medium (330).
